# EUROPÄISCHE PATENTANMELDUNG

(11) **EP 1 310 813 A1**
(43) Veröffentlichungstag der Anmeldung: **14.05.2003**
(21) Anmeldenummer: 02024003.2
(22) Anmeldetag: 26.10.2002
(51) Int. Cl.: G02B 6/42

(54) **Stecker und Steckeraufnahme für ein optoelektronisches Steckersystem**

(30) Priorität: 08.11.2001 DE 10154834
(71) Anmelder: DaimlerChrysler AG, 70567 Stuttgart (DE)
(72) Erfinder: Moisel, Jörg, 89231 Neu-Ulm (DE); Huber, Hans-Peter, 89233 Neu-Ulm (DE); Rode, Manfred, 89250 Senden (DE)

(57) **Zusammenfassung**

Die Erfindung betrifft ein optoelektronisches Steckersystem mit einem Stecker (1) und einer Steckeraufnahme (2). Der Stecker (1) weist ein hülsfenförmiges Gehäuse (3) mit einem Bereich zur Zuführung und Abgabe eines optischen Signals sowie wenigstens einen optisch-elektrischen und/ oder elektrisch-optischen Wandler (8a,8b) und diesem zugeordnete optische Elemente (7) zur Strahlführung auf. Darüber hinaus sind elektrische Kontakte (10) zur Zuführung und Abgabe eines elektrischen Signals vorgesehen, die über eine Verstärkerstufe (9a,9b) mit dem oder den Wandlern (8a,8b) verbunden sind. Das hülsenförmige Gehäuse (3) ist vorzugsweise so zylinderförmig oder kegelstumpfförmig ausgebildet, daß es in eine korrespondierende Ausnehmung (4) in der Steckeraufnahme (2) im verbundenen Zustand eingreift. Die Steckeraufnahme (2) ist zur Integration auf eine Leiterplatte vorgesehen. Das optoelektronische Steckersytem erweist sich als besonders klein in seinen äußeren Abmessungen.

## Beschreibung

Es sind optische Steckersysteme bekannt, bei denen zwei Lichtwellenleiterenden, von denen eines mit einem mechanischen Stekker und der andere mit einer zu dem Stecker korrespondierenden Steckeraufnahme versehen sind, in mechanische Verbindung gebracht werden und anschließend durch einen Federbügel in mechanischer Verbindung gehalten werden. Im verbundenen Zustand können somit optische Signale von einem Lichtwellenleiterende in das andere Lichtwellenleiterende übertragen werden. Zum Lösen wird der Federbügel gelöst und die beiden Teile des optischen Stecksystems werden voneinander getrennt.

Entsprechende elektrische Steckersysteme sind beispielsweise aus der Haustechnik bekannt, wo ein Gerätestecker in die Steckdose des Stromnetzes eingeführt wird und ein Übertragen von elektrischen Signalen oder elektrischer Energie von der Stekkeraufnahme in den Stecker ermöglicht. Derartige Systeme können entweder optische oder elektrische Signale übertragen.

Aus dem deutschen Patent DE 197 10 504 C2 ist ein optoelektrisches Modul bekannt, welches eine optische Schnittstelle und eine elektrische Schnittstelle aufweist. Die Schnittstellen sind im wesentlichen über eine raumgreifende rechteckige Leiterplatte miteinander verbunden. Auf der Leiterplatte sind eine Reihe von elektronischen Bauteilen angeordnet. Die Leiterplatte wird von beiden Seiten mit je einem im wesentlichen rechteckigen Gehäusedeckel abgedeckt. Hierdurch entsteht ein optoelektrisches Modul von erheblicher Größe.

Aufgabe der Erfindung ist es, ein optoelektrisches Steckersystem mit Stecker und Steckeraufnahme anzugeben, das eine einfache und sichere mechanische Verbindung ermöglicht und das eine Transformation von optischen in elektrischen Signalen oder umgekehrt ermöglicht. Dabei soll eine möglichst raumsparende Ausbildung des Steckersystem möglich sein.

Diese Aufgabe wird gelöst, durch einen Stecker für ein optoelektronisches System mit den Merkmalen des Anspruchs 1, eine Steckeraufnahme für ein optoelektronisches Steckersystem mit den Merkmalen des Anspruchs 10 sowie durch das optoelektronische Steckersystem mit den Merkmalen des Anspruches 14.

Vorteilhafte Weiterbildungen sind Gegenstand der abhängigen Ansprüche.

Der erfindungsgemäße Stecker für ein optoelektronisches Stekkersystem weist ein hülsenförmiges Gehäuse auf, in dem ein Bereich für die Zuführung oder die Abgabe eines optischen Signals vorgesehen ist. Über den Bereich kann ein optisches Signal in das Innere des Gehäuses eingeführt werden, dort wird es durch ein optisches Element, das zur Strahlführung und Strahllenkung vorgesehen ist, einem elektrisch-optischen oder optisch-elektrischen Wandler zugeführt. Durch das optische Element, das aus einer oder mehreren optischen Linsen, Spiegeln oder anderen optischen Komponenten bestehen kann, wird sichergestellt, daß eine effiziente Übertragung des optischen Signals zum optisch-elektrischen Wandler oder vom elektrisch-optischen Wandler über den Bereich nach außen gewährleistet ist. Neben dem oder den Wandlern ist innerhalb des hülsenförmigen Gehäuses eine Verstärkerstufe zur Aufbereitung des elektrischen Signals vorgesehen, die einerseits mit dem Wandler und andererseits mit elektrischen Kontakten zur Zuführung oder Abgabe eines elektrischen Signals verbunden ist. Durch die erfindungsgemäße Wahl des hülsenförmigen Gehäuses gelingt es, bei kleinen Außenmaßen ein ausreichendes Volumen zur Anordnung der für eine sichere Transformation der optischen in elektrische Signale oder umgekehrt notwendigen Komponenten zur Verfügung zu stellen.

Als elektrisch-optische Wandler können LED's, Laserdioden oder andere lichtemittierende Dioden, während als optisch-elektrische Wandler Foto- oder PIN-Dioden Verwendung finden. Neben den Dioden sind auch entsprechende Transistoranordnungen zur Verwendung geeignet. Vorzugsweise werden diese Wandler als ungehäuste Dioden oder Transistoren verwendet und mittels Bondtechnik elektrisch verbunden. Hierdurch gelingt es, das erforderliche Volumen in dem hülsenförmigen Gehäuse im Bereich der Zuführung oder der Abgabe des optischen Signals gering zu halten und dadurch das Außenmaß des Steckers klein zu halten.

Daneben ist es möglich, neben einer Verstärkerstufe auch weitere elektrische Schaltungskomponenten, wie bspw. Decoder, Entzerrer, Rauschunterdrückungsstufen oder Treiber anzuordnen, die den sicheren und effizienten Betrieb des Steckers mit seiner Transformationsfunktion von optischen in elektrische Signale und/oder umgekehrt ermöglichen.

Vorzugsweise werden auf der Außenseite des hülsenförmigen Gehäuses mechanische Führungselemente angeordnet, die ein sicheres geführtes Einführen des hülsenförmigen Gehäuse in die Steckeraufnahme gewährleisten, wobei durch entsprechende Wahl der Führungselemente eine Verdrehsicherung ermöglicht wird. Vorzugsweise werden die Führungselemente mit Rastelementen, insbesondere mit federbewährten Rastelementen versehen, so daß eine Verrastung des Steckers in der entsprechenden Steckeraufnahme gewährleistet ist und ein ungewolltes Lösen des Steckersystems auch bei Erschütterungen verhindert werden kann.

Vorteilhaft ist es, das hülsenförmige Gehäuse zylindrisch oder kegelstumpfförmig auszubilden, da hierdurch auf besonders vorteilhafte Weise die Möglichkeit gegeben ist, bei vorgegebenen Innenvolumen ein sehr begrenztes Außenmaß des Gehäuses des Steckers zu erreichen. Durch die verjüngende Ausbildung der Hülse bei einer kegelstumpfförmigen Gestalt des Gehäuses ist ein Einführen des Steckers in eine zugehörige Steckeraufnahme durch den Einfädeleffekt und das zugehörige Fokussieren des Steckers in die korrespondierende Ausnehmung der Steckeraufnahme erreicht. Hierdurch ist eine einfache Handhabung des optoelektronischen Steckersystems einschließlich einer sicheren Ausführung des Steckersystems respektive des Steckers erreicht.

Nach einer besonders bevorzugten Ausbildung der Erfindung sind die elektrischen Kontakte bzw. der Bereich zur Zuführung oder zur Abgabe des optischen Signals im Bereich der Endflächen des hülsenförmigen Gehäuses angeordnet. Dabei durchstoßen die elektrischen Kontakte die ebenen Endflächen. Dabei hat es sich als besonders vorteilhafte Ausbildung erwiesen, die elektrischen Kontakte in die eine Endfläche zu integrieren, während in die andere gegenüberliegende Endfläche der Bereich für die Zuführung bzw. die Ableitung des optischen Signals integriert wird. Dadurch wird ein sehr schlanker Stecker geschaffen. Durch seine räumliche Aufgliederung der Funktionsbereiche insbesondere durch die entgegengesetzte Anordnung der optischen bzw. elektrischen Zuleitungen bzw. Ableitungen gelingt es, einen sehr sicheren und effizienten Aufbau des Steckers mit der Transformationsfunktion von optischen in elektrische bzw. umgekehrten Signalen zu schaffen. Durch diese schlanke Ausführung mit dem hülsenförmigen Gehäuse ist eine gute Handhabung des Steckers für ein optoelektronisches Steckersystem erreicht.

Wird diese Anordnung der Kontakte und des Bereichs für die Zuführung bzw. die Ableitung des optischen Signals in Verbindung mit einer einheitlichen festgelegten Abmessung beispielsweise entsprechend einer Norm, wie z.B. der DIN 42162 gewählt, so gelingt es, ein universell einsetzbares Steckersystem zu generieren, das aufgrund der Normierung in weitem Maße unabhängig von dem Einsatzort ist. Durch verbreitete Umsetzung der Norm ist auch ein Verbinden des Steckers in eine stationäre Steckeraufnahme an einem anderen Ort problemlos möglich und dadurch ein besonders einfaches und sicheres Handhaben des Steckersystems erreicht.

In besonderer Weise hat es sich bewährt, den Bereich der Komponenten des Steckers, die mit dem optischen Signal beaufschlagt werden, das heißt insbesondere, den Bereich für die Zuführung bzw. die Ableitung des optischen Signals, die optischen Elemente und die optisch-elektrischen bzw. die elektrisch-optischen Wandler getrennt von den Komponenten für die elektrischen Signale, das heißt insbesondere, die elektrischen Kontakte und die Verstärkerstufe räumlich voneinander getrennt anzuordnen. Durch diese Anordnung der Komponenten des Steckers für ein optoelektronisches Steckersystem gelingt es, eine sehr effiziente Ausnutzung des Raumes im Inneren des hülsenförmigen Gehäuses zu realisieren, durch welches es gelingt, die äußeren Maße des Steckers klein zu halten und dadurch den Einsatz des optoelektronischen Steckersystems auch unter schwierigen äußeren Bedingungen, beispielsweise in einem Automobil oder in einem Flugzeug, zu gewährleisten.

Als besonders vorteilhaft hat es sich erwiesen, bei einem Stekker mit wenigstens einem optisch-elektrischen und einem elektrisch-optischen Wandler mit zugeordneten Verstärkerstufen zur Aufbereitung des elektrischen Signals diese voneinander räumlich getrennt auszubilden. Darüber hinaus hat es sich bewährt, zusätzlich zu der räumlichen Trennung eine Abschirmung beispielsweise als Abschirmblech, das zwischen den Wandlern und den zugeordneten Verstärkerstufen angeordnet ist und geerdet ist, vorzusehen, wodurch die wechselseitige Beeinflussung der elektrischen Signale durch elektromagnetische Störungen der jeweils anderen Signale weitgehend verhindert ist. Im besonderen hat es sich bewährt, den Innenraum des hülsenförmigen Gehäuses durch das Einbringen eines längs verlaufenden Abschirmbleches teilweise zu halbieren und die beiden entstehenden Teilbereiche zur Trennung der beiden entgegengesetzt verlaufenden Signalsströme zu verwenden. Vorzugsweise wird diese Trennung nicht bis in den Bereich des optischen Elementes bzw. bis in den Bereich der Aufnahme des Lichtwellenleiters und ggf. nicht bis in den Bereich der Wandler fortgeführt, so daß der Bereich der Komponenten des Steckers, über den die optischen Signale geleitet werden, als einheitliche Signalstrecke Verwendung finden. In diesem Bereich ist auch nicht mit einer wechselseitigen Beeinflussung der optischen Signale zu rechnen. Hierdurch gelingt es, einen sehr störungssicheren Stecker für ein optoelektronisches Steckersystem zu schaffen.

Vorzugsweise wird der Stecker mit einer Sammellinse als optisches Element versehen, die mit ihrem Brechungsindex ihrem Abstand zum optisch elektrischen Wandler und ihren Abmessungen so gewählt und angeordnet ist, daß sie das einfallende optische Signal möglichst vollflächig auf den optisch-elektrischen Wand-1er fokusiert. Hierdurch wird ein sehr guter Wirkungsgrad für die Übertragung des optischen Signals von einer Steckeraufnahme zu dem Stecker über das optische Element auf den optisch elektrischen Wandler zur Wandlung in ein elektrisches Signal erreicht. Hierdurch gelingt es, die einzelnen Komponenten, insbesondere die wirksame Fläche es optisch-elektrischen Wandlers, klein und dadurch kostengünstig zu halten. Der Stecker und das damit verbundene Steckersystem erweist sich als sehr geeignet für den Masseneinsatz, insbesondere unter schwierigen Bedingungen, insbesondere in der Automobilindustrie oder in der Hochfrequenz- oder Kommunikationstechnik.

Nach einer anderen bevorzugten Ausführung des Steckers wird das optische Element in Form einer Sammellinse so gewählt und angeordnet, daß das von dem elektrisch-optischen Wandler abgegebene optische Signal von der Sammellinse aufgenommen wird und so gebrochen wird, daß es als optisches Signal mit im wesentlich parallelen Strahlengang von dem Stecker abgegeben wird. Durch den aufgeweiteten, parallelen Strahlengang des abgegebenen optischen Signals gelingt es, eine Freistrahlstrecke zu schaffen, die eine Übertragung der optischen Signale vom Stecker in die zugehörige Steckeraufnahme auch unter schwierigen Bedingungen gewährleistet. Insbesondere wirken sich ein schlechtes Zusammenfügen von Stecker und Steckeraufnahme bzw. Fertigungstoleranzen des Steckers oder der Steckeraufnahme bzw. ein Verkanten durch die Wahl einer sich im wesentlichen nicht weitenden oder verengenden Freistrahlstrecke nur sehr wenig auf die Übertragungsqualität aus.

Nach einer anderen bevorzugten Ausführungsform des erfindungsgemäßen Steckers ist im Bereich der Zuführung oder Abgabe eines optischen Signals eine Aufnahme vorgesehen, die geeignet ist, einen Lichtwellenleiter aufzunehmen, über welchen das optische Signal zugeführt oder abgegeben werden kann. Dabei ist die Aufnahme so ausgebildet, daß sie dem Lichtwellenleiter angepaßt ist. Durch die Anpassung ist sichergestellt, daß der Lichtwellenleiter mittels der Aufnahme in eine vorgegebene Position im Gehäuse des Steckers zum Liegen kommt und dadurch so positioniert ist, daß eine optimierte Einkopplung des optischen Signals vom dem Stecker in den Lichtwellenleiter oder umgekehrt gewährleistet ist. Durch die Anpassung der Aufnahme, insbesondere durch die Anpassung der Abmessungen der die Aufnahme bildenden Ausnehmung an die Abmessungen des Lichtwellenleiters, ist weiterhin sichergestellt, daß ein unerwünschtes Herausrutschen des Lichtwellenleiters, insbesondere bei Erschütterungen, verhindert ist. Dies kann insbesondere durch vorgesehene Verbreiterungen und entsprechende Ausnehmungen am Lichtwellenleiter bzw. an dem Stecker im Bereich der Aufnahme sichergestellt werden.

Erfindungsgemäß wird die Steckeraufnahme für ein optoelektronisches Steckersystem mit einer Ausnehmung versehen, die mit dem hülsenförmigen Gehäuse eines erfindungsgemäßen Steckers dahingehend korrespondiert, daß eine formschlüssige Aufnahme des Steckers in der Steckeraufnahme ermöglicht ist. Vorzugsweise sind an der Außenseite des Gehäuses der Stecker Führungselemente oder Ausnehmungen oder Vorsprünge vorgesehen, die mit entsprechenden Führungselementen, Ausnehmungen oder Vorsprünge auf der Innenseite der Steckeraufnahme korrespondieren und dadurch ein zielgerichtetes, insbesondere verdrehsicheres Einführen des erfindungsgemäßen Steckers in die erfindungsgemäße Steckeraufnahme ermöglichen. Vorzugsweise sind die Ausnehmungen so ausgebildet, daß sie ein Verrasten, insbesondere durch federbewährte Führungselemente, gewährleistet. Hierdurch ist eine sichere Verbindung bzw. eine sichere Aufnahme des Steckers in der Steckeraufnahme auch unter ungünstigen äußeren Bedingungen durch Erschütterungen, Stöße und ähnliches gegeben.

Vorzugsweise wird die Steckeraufnahme für ein optoelektronisches Steckersystem mit einer Ausnehmung versehen, dem hülsenförmigen Gehäuse des Steckers des optoelektronischen Steckersystems korrespondiert, und mit einem optischen Element versehen, das die Übertragung eines optischen Signals über eine Freistrahlstrecke mit im wesentlichen parallelen Strahlengang zwischen dem optischen Element der Steckeraufnahme und dem optischen Element des Steckers ermöglicht. Hierzu wird das optische Element, das vorzugsweise eine Sammellinse beinhaltet, so ausgebildet, daß es mit einer Lichtquelle so zusammenwirkt, daß die von der Lichtquelle emittierten Lichtsignale des optischen Elements so gebrochen werden, daß die optischen Signale in einem im wesentlichen parallelen Strahlengang in Richtung des Bereiches zur Zuführung eines optischen Signals in dem erfindungsgemäßen Stecker vorgesehen ist. Darüber hinaus ist es möglich, die Anordnung auch so zu verwenden, daß das optische Signal von dem Stecker, welcher in einem im wesentlichen parallelen Strahlengang auf das optische Element trifft, so gebündelt wird, daß es in einem Lichtwellenleiter oder auf einen Mikrospiegel zur Einkopplung in einen Lichtwellenleiter oder eine optische Backplane geeignet ist. Dabei werden die optischen Elemente sowohl im Stecker als auch in der Steckeraufnahme so gewählt, daß sie einen parallelen Strahlengang des Lichts mit einem Strahldurchmesser von einigen Millimetern erreichen. Hierdurch wird eine sehr sichere Übertragung der optischen Signale gegen unerwünschte Verschiebungen der Komponenten des optoelektronischen Stecksystems erreicht.

Es hat sich besonders bewährt, eine Steckeraufnahme nicht nur zur Aufnahme eines Steckers, sondern zur Aufnahme mehrerer Stecker vorzusehen, wobei es sich besonders bewährt hat, die Ausnehmungen in einer Reihe anzuordnen, da hierdurch ein besonders einfaches Einführen der einzelnen erfindungsgemäßen Stecker in die erfindungsgemäße Steckeraufnahme mit den in einer Reihe angeordneten Ausnehmungen ermöglicht ist. Diese einfache Handhabung des Steckersystems ist dadurch erreicht, daß jede Ausnehmung von zwei Seiten erreichbar ist, ohne daß auf die benachbarten Ausnehmungen unmittelbar Einfluß genommen werden muß. Hierdurch gelingt es, eine räumlich sehr kompakte Anordnung aus Steckeraufnahme mit mehreren integrierbaren Steckern zu schaffen. Vorzugsweise werden dabei mehrere erfindungsgemäße Stecker zu einer Einheit so zusammengefaßt, daß eine gemeinsame Einführung in die Steckeraufnahme mit den in einer Reihe angeordneten Ausnehmungen ermöglicht ist.

Es hat sich besonders bewährt, die Steckeraufnahme so auszubilden, daß sie auf einer Leiterplatte auf einfache Weise befestigt werden kann, hierfür sind insbesondere Rastverbindungen oder Schraubverbindungen geeignet. Diese Form der Befestigung auf einer Leiterplatte hat sich in besonderen Weise bei einer Steckeraufnahme für die Aufnahme mehrerer Stecker bewährt. Hierdurch wird durch wenige Fertigungsschritte eine sehr sichere Befestigung des Steckersystems mit mehreren Steckern auf einer Leiterplatte und damit eine sehr sichere Verbindung und Transformation mehrerer optischer Signale in elektrische Signale mit Übertragung auf die Leiterplatte erreicht.

Es hat sich besonders bewährt, die erfindungsgemäßen Stecker mit den korrespondierenden Steckeraufnahmen zu einem optoelektronischen Steckersystem zu kombinieren. Dabei ist es auch möglich, die Steckeraufnahme universell auch zu Aufnahme rein elektrischer Stecker mit einem entsprechenden hülsenförmigen Gehäuse vorzusehen. Hierdurch wird der universelle Einsatz dieses optoelektronischen Steckersystems im besonderem Maße erreicht, da es durch seine mechanische Struktur und die elektrischen Anschlußkontakte zur Integration auf einer Leiterplatte in besonderer Weise universell geeignet ist.

Im folgenden wird die vorliegende Erfindung anhand von Zeichnungen beispielhaft näher beschrieben.
- Figur 1: zeigt einen Längsschnitt durch einen Stecker, der in eine Steckeraufnahme für ein optoelektronisches Steckersystem eingebracht ist und
- Figur 2: zeigt einen Querschnitt durch einen anderen Stecker für ein optoelektronisches Steckersystem, der in eine korrespondierende andere Steckeraufnahme eingebracht ist.
- Figur 3: zeigt einen anderen Stecker für ein optoelektronisches Steckersystem mit einer korrespondierenden anderen Steckeraufnahme.

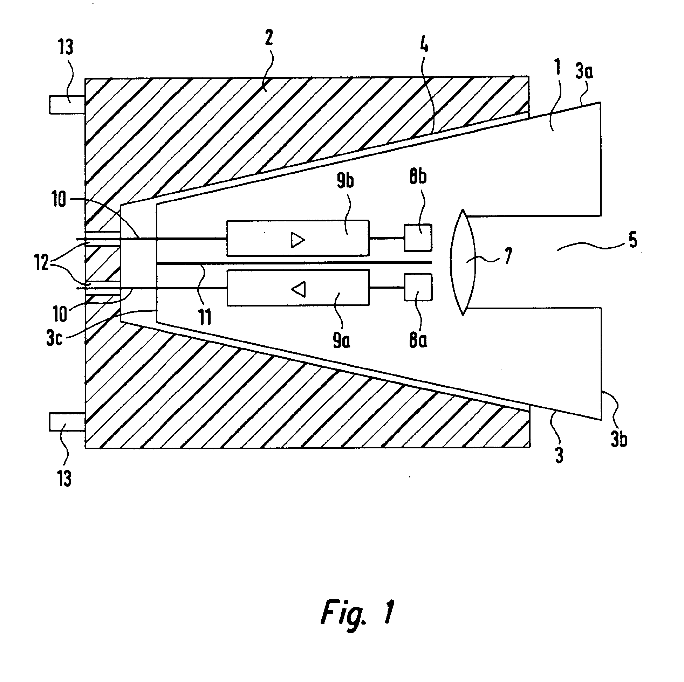

In Figur 1 ist in einem Längsschnitt ein Stecker 1 für ein optoelektronisches Steckersystem mit einer Steckeraufnahme 2 dargestellt. Der Stecker 1 zeigt ein hülsenförmiges Gehäuse 3, das kegelstumpfförmig ausgebildet ist. Es zeigt eine Mantelfläche 3a und die zwei Endflächen 3b und 3c. Die Endfläche 3b wird durch eine Ausnehmung 5 unterbrochen, die den Bereich 5 zur Zuführung oder Abgabe des optischen Signals bildet. Über den Bereich 5 werden die optische Signale in den Stecker 1 eingespeist oder aus diesem herausgeführt. Die mit im wesentlichen parallelem Strahlengang in den Stecker eingespeisten optischen Signale treffen auf ein optisches Element 7, das Teil des Gehäuses 3 ist und das dieses begrenzt und das als eine Sammellinse 7 dargestellt ist. Die Sammellinse 7 ist so gewählt und so angeordnet, daß die dem Stecker 1 zugeführten optischen Signale mit im wesentlichen parallelem Strahlengang im wesentlichen vollflächig auf den optisch-elektrischen Wandler 8a treffen, der das auftreffende Licht der optischen Signale in elektrische Signale wandelt und sie dem Verstärker 9a zuführt. In dem Verstärker 9a werden diese zugeführten elektrischen Signale verstärkt, decodiert und durch geeignete Maßnahmen, zumindest teilweise, von dem Rauschen befreit. Diese elektrischen Signale werden den elektrischen Kontakten 10 des Steckers 1 zugeführt.

Über andere elektrische Kontakte 10 werden dem Stecker 1 elektrische Signale zugeführt, die einem Verstärker 9b zugeführt werden, der die Signale für die Transformation in optische Signale vorbereitet, indem sie auf entsprechende Spannungspegel bzw. in entsprechende Signalform gewandelt werden, um sie anschließend dem elektrisch-optischen Wandler 8b zuzuführen. Dieser wandelt die zugeführten elektrischen Signale in optische Signale, die in Richtung des Lichtwellenleiters 6 abgestrahlt werden und mittels des optischen Elementes 7 so strahlgeführt werden, daß sie in das Ende des Lichtwellenleiters 6 eingekoppelt werden.

Der optisch-elektrische Wandler ist als ungehäuste PIN-Diode realisiert, die auf einem Träger aufgebracht und mit dem Verstärker über Bonddrähte verbunden ist. Der korrespondierende elektrisch optische Wandler 8b ist als Laserdiode realisiert, die ebenso als ungehäuste gebondete Diode realisiert ist. Durch die Realisierung als ungehäuste Dioden gelingt es, das Baumaß sehr gering zu halten und eine kompakte Einheit aus Wandler 8a, 8b und optischer Einheit 7 und Lichtwellenleiter 6 in der Aufnahme 5 zu bilden.

Die Verstärker 9a und 9b sind vorzugsweise als chipgebondete Dies, die unmittelbar mit den Wandlern 8a 8b verbunden sind. Insbesondere sind diese auf den selben Trägern angeordnet. Hierdurch gelingt es wiederum, das notwendige Baumaß zu reduzieren und diese sicher in dem hülsenförmigen Gehäuse 3 des Steckers 1 unterzubringen. Damit gelingt es, die Außenmaße des Steckers 1 sehr klein zu halten. Es ist durch diese Anordnung möglich, den Stecker 1 mit einem Durchmesser von einigen Millimetern zu realisieren.

Der auf einem gemeinsamen Träger angeordnete optisch-elektrische Wandler 8a und der Verstärker 9a sind räumlich von den auf einem anderen Träger gemeinsam angeordneten elektrisch-optischen Wandler 8b und Verstärker 9b in dem Gehäuse 3 angeordnet. Zwischen diesen ist eine Abschirmwand 11 angeordnet, die geerdet ist. Hierdurch gelingt es, ein wechselseitiges Beeinflussen der elektrischen Signale zu verhindern und dadurch die Qualität der Signalübertragung hoch zu halten. Die Abschirmung 11 trennt die Bereiche der elektrischen Signalübertragung, wobei sie nicht den Bereich der optischen Signalübertragung in dem Stekker 1 trennt. Die optischen Signale werden zwischen dem Lichtwellenleiter 6 und den Wandlern 8a und 8b ohne Behinderung durch die Abschirmwand 11 übertragen. Durch die geeignete Wahl des optischen Elementes 7 wird die Störungsfreiheit der optischen Übertragung von den Wandlern zum Lichtwellenleiter und umgekehrt zu dem sichergestellt.

Die Mantelfläche 3a des Gehäuses 3 des Steckers 1 korrespondiert mit der Ausnehmung 4 der Steckeraufnahme 2 dahingehend, daß im verbundenen Zustand der Stecker 1 flächig an der Stekkeraufnahme 2 anliegt. Die aus der Endfläche 3c heraustretenden elektrischen Kontakte 10 des Steckers 1 greifen in entsprechende Löcher der Steckeraufnahme 2 ein. Die Position der Löcher ist so gewählt, daß eine sichere elektrische Kontaktierung der an der Wandung der Löcher angebrachten Kontaktflächen 12 mit den elektrischen Kontakten 10 gewährleistet ist. Die Kontaktflächen 12 sind mit entsprechenden Übergabestellen zu einer Leiterplatte verbunden, durch welche eine sichere Kontaktierung der Steckeraufnahme zu einer Leiterplatte erreichbar ist. Um eine sichere mechanische Verbindung der Steckeraufnahme 2 mit einer Leiterplatte zu ermöglichen, sind Stifte 13 an der Ausnehmung 4 abgewandten Seite der Steckeraufnahme 2 vorgesehen, die in entsprechende Löcher der Leiterplatte eingreifen und mit diesen eine rastende Verbindung schaffen.

Durch die konisch zulaufende Form des Gehäuses 3 des Steckers 1 mit der korrespondierenden Ausnehmung 4 der Steckeraufnahme 2 ist ein einfaches und sicheres Einfädeln des Steckers 1 in die Steckeraufnahme 2 gewährleistet. Dies auch dann, wenn, wie bei der vorliegenden Erfindung, die äußeren Maße des Steckers 1 bzw. der Steckeraufnahme 2 nur einige Millimeter betragen.

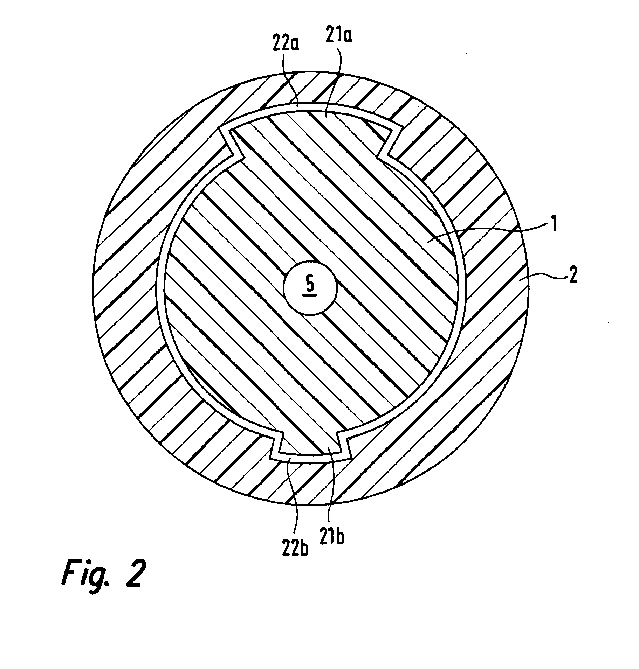

In Figur 2 ist in einem Querschnitt ein anderer Stecker 1 in einer anderen Steckeraufnahme 2 dargestellt. Der Stecker 1 weist ein zylinderförmiges hülsenförmiges Gehäuse auf, das zwei vorspringende Teile 21a und 21b aufweist. Die Vorsprünge 21a und 21b sind unterschiedlich groß ausgebildet. Sie erstrecken sich in Längsrichtung des Gehäuses und umfassen einen wesentlichen Teil des zylinderförmigen Gehäuses des Steckers 1. Zu den Vorsprüngen 21a und 21b sind in der Steckeraufnahme 2 korrespondierende Ausnehmungen 22a und 22b vorgesehen. Diese entsprechen in ihrer Größe und Form den Vorsprüngen 21a, 21b des Steckers 1. Durch diese differenzierte Gestaltung der Vorsprünge 21a, 21b mit den zugehörigen Ausnehmungen 22a, 22b gelingt es, ein verdrehsicheres Einführen des Steckers 1 in die Stekkeraufnahme 2 zu gewährleisten. Dadurch gelingt es, die elektrischen Kontakte des Steckers 1 und den Lichtwellenleiter in der Aufnahme 5 stets in vorgegebenen Positionen zu bringen, was eine sichere elektrische Kontaktierung und optische Verbindung gewährleistet. Dies ist für den Einsatz des optoelektronischen Steckersystems aus Stecker 1 und Steckeraufnahme 2 besonderer bedeutsam.

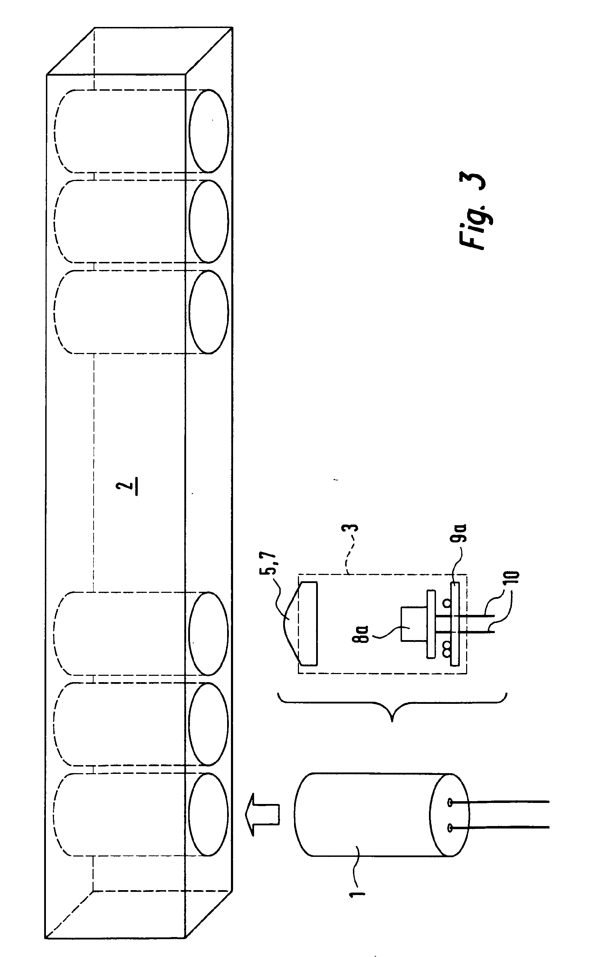

In Figur 3 ist in einer schematischen Darstellung ein beispielhafter Stecker 1 für ein optoelektronisches Steckersystem dargestellt, der in eine Steckeraufnahme so einbringbar ist. Der Stecker 1 zeigt ein zylinderförmiges Gehäuse, dessen eine Endfläche von elektrischen Kontakten durchstoßen wird. Die Stekkeraufnahme 2 zeigt eine Reihe von Ausnehmungen 4 zur Aufnahme von Steckern 1, die zylinderförmig ausgebildet sind und mit dem Gehäuse des Steckers 1 korrespondieren. Das heißt der Stecker 1 kann in die Ausnehmungen 4 eingeführt werden, ohne daß ein wesentliches Verkippen oder ein wesentliches Spiel zwischen dem Stecker 1 und der Steckeraufnahme 2 gegeben ist. Hierdurch ist eine sehr sichere Führung und Positionierung des Steckers 1 in der Steckeraufnahme 2 gegeben.

Durch die Anordnung der verschiedenen Ausnehmungen 4 in Form einer Reihe in einer im wesentlichen quaderförmigen Steckeraufnahme 2 gelingt es, mehrere Stecker 1 des optoelektronischen Steckersystems einzubringen und eine sichere Kontaktierung zu ermöglichen. Die Steckeraufnahme 2 wird bevorzugt auf einer Leiterplatte mit nicht dargestellten Befestigungselementen, beispielsweise in Form von Schraub- oder Nietverbindungen, befestigt. Mithin gelingt es, mit wenigen Befestigungelementen eine Mehrzahl von Steckern 1 und Steckeraufnahmen 4 miteinander in Verbindung zu bringen.

Neben der schematischen Darstellung der äußeren Gestalt des Steckers 1 ist dessen schematischer innerer Aufbau dargestellt. Über die elektrischen Kontakte 10 werden die elektrischen Signale dem Stecker 1 zugeführt. Diese werden in der Verstärkerstufe 9a verstärkt und für eine Wandlung in optische Signale angepaßt. Anschließend werden die verstärkten und angepaßten elektrischen Signale einer Photodiode 8a, die als elektrisch optischer Wandler wirkt, zugeführt. Die Photodiode 8a zeigt eine typischerweise runde lichtemittierende Fläche mit einem Durchmesser von wenigen 100 Mikrometern. Von der Photodiode 8a wird Licht in Richtung des Bereiches 5 zur Abgabe eines optischen Signals ausgesandt. In diesem Bereich 5 ist eine Sammellinse 7 als optisches Element zum Bündeln des von der Photodiode 8a ausgesandten optischen Signals vorgesehen. Die Sammellinse 7 zeigt einen typischen Durchmesser von mehreren Millimetern. Sie ist in ihrem Brennweite und ihrem Abstand zu der Photodiode 8a so gewählt und angeordnet, daß die von der Photodiode 8a emittierten Lichtsignale durch die Sammellinse so gebrochen werden, daß aus dem Stecker Lichtsignale mit einem im wesentlichen parallelen Strahlengang austreten. Der Lichtstrahl zeigt einen typischen Durchmesser von mehreren Millimetern. Durch diese Ausbildung des Steckers mit der Sammellinse 7 im Bereich der Endfläche des zylindrischen Gehäuses 3 gelingt es, eine sehr sichere und effiziente Kopplung der emittierten Lichtsignale in eine Steckeraufnahme respektive in einen Lichtwellenleiter oder in eine optische Backplane zu ermöglichen. Dabei gelingt es, durch die Aufweitung des im wesentlichen parallelen Lichtstrahls von dem Stecker 1 Maßtoleranzen oder durch andere Faktoren, insbesondere thermische Faktoren, verursachte Veränderungen der Maßhaltigkeiten oder der Zuordnung der entsprechenden Komponenten zueinander verursachte Störungen oder negative Einflüsse auf die Wirksamkeit der optischen Übertragung der Signale weitgehend auszuschließen oder zumindest einzuschränken.

Im verbundenen Zustand, d. h. im eingebrachten Zustand des Steckers 1 in die Ausnehmung 4 der Steckeraufnahme 2 wird auf der Rückseite der Steckeraufnahme 2 ein optisches Signal abgegeben, das auf ein optisches Element trifft, das eine sichere Einkopplung des optischen Signals insbesondere in eine optische Backplane, vorzugsweise in Verbindung mit einem Mikrospiegel, ermöglicht. In diesem Falle gewährleistet die Steckeraufnahme 2 die exakte mechanische Zuordnung der Photodiode 8 zu der Sammellinse 7 und über das Gehäuse 3 mit der Ausnehmung 4 der Steckeraufnahme 2, die mit einer Leiterplatte mit optischer Backplane verbunden ist, zu der optischen Übertragungsstrecke der optischen Backplane. Diese Anordnung ermöglicht eine universelle flexible Verbindung und Trennung der verschiedenen Komponenten eines optoelektronischen Stecksystems mit den damit verbundenen elektronischen Komponenten bzw. mit den damit verbundenen optischen Komponenten.

## Patentansprüche

1. Stecker (1) für ein optoelektronisches Steckersystem mit einem hülsenförmigen Gehäuse (3),
das einen Bereich (5) zur Zuführung oder Abgabe eines optischen Signals aufweist, wobei dem Bereich (5) ein optisch-elektrischer oder elektrisch-optischer Wandler (8a, 8b) zugeordnet ist und zwischen Bereich (5) und Wandler (8a, 8b) ein optisches Element (7) zur Strahlführung zwischengeordnet ist,
und das elektrische Kontakte (10) zur Zuführung oder Abgabe eines elektrischen Signals aufweist, wobei diesen Kontakten (10) oder Wandler (8a, 8b) eine Verstärkerstufe (9a, 9b) zur Aufbereitung des elektrischen Signals zugeordnet ist.

2. Stecker nach Anspruch 1, **dadurch gekennzeichnet, daß** auf der Außenseite des hülsenförmigen Gehäuses (3) mechanische Führungselemente (21a, 21b) angeordnet sind.

3. Stecker nach einem der vorstehenden Ansprüche, **dadurch gekennzeichnet, daß** das Gehäuse (3) zylindrisch oder kegelstumpfförmig ausgebildet ist.

4. Stecker nach einem der vorstehenden Ansprüche, **dadurch gekennzeichnet, daß** der Bereich (5) und/ oder die elektrischen Kontakte (10) an einer Endfläche (3a, 3b) des hülsenförmigen Gehäuses (3) angeordnet sind.

5. Stecker nach einem der vorstehenden Ansprüche, **dadurch gekennzeichnet, daß** der Bereich (5), der optisch-elektrischer oder elektrisch-optischer Wandler (8a, 8b) und das optische Element (7) zur Strahlführung räumlich von den elektrischen Kontakten (10) und der Verstärkerstufe (9a, 9b) im Gehäuse (3) getrennt angeordnet sind.

6. Stecker nach einem der vorstehenden Ansprüche, **dadurch gekennzeichnet, daß** wenigstens ein optisch-elektrischer und ein elektrisch-optischer Wandler (8a, 8b) mit zugeordneten Verstärkerstufen (9a, 9b) zur Aufbereitung des elektrischen Signals vorgesehen sind die räumlich voneinander getrennt oder gegeneinander abgeschirmt im Gehäuse (3) angeordnet sind.

7. Stecker nach einem der vorstehenden Ansprüche 1 - 5, **dadurch gekennzeichnet, daß** in dem Bereich (5) zur Zuführung oder Abgabe eines optischen Signals als optisches Element (7) eine Sammellinse so angeordnet ist, daß ein mit parallelem Strahlengang einfallendes optisches Signal auf den optisch-elektischen Wandler (8a) fokusiert ist.

8. Stecker nach einem der vorstehenden Ansprüche 1 - 5, **dadurch gekennzeichnet, daß** in dem Bereich (5) zur Zuführung oder Abgabe eines optischen Signals als optisches Element (7) eine Sammellinse so angeordnet ist, daß ein von dem elektisch-optischen Wandler (8b) abgegebenes optisches Signal mit im wesentlichen parallelem Strahlengang von dem Stecker abgegeben wird.

9. Stecker nach einem der vorstehenden Ansprüche, **dadurch gekennzeichnet, daß** der Bereich (5) zur Zuführung oder Abgabe eines optischen Signals eine Aufnahme für einen Lichtwellenleiter vorgesehen ist, über welchen ein optisches Signal zugeführt oder abgegeben werden kann.

10. Steckeraufnahme für ein optoelektronisches Steckersystem, **dadurch gekennzeichnet, daß** es eine Ausnehmung (4) aufweist, die mit dem hülsenförmigen Gehäuse (3) eines Steckers (1) nach einem der vorstehenden Ansprüche korrespondiert.

11. Steckeraufnahme für ein optoelektronisches Steckersystem, **dadurch gekennzeichnet, daß** es eine Ausnehmung (4) aufweist, die mit dem hülsenförmigen Gehäuse (3) eines Steckers (1) nach Anspruch 7 oder 8 korrespondiert und daß sie ein optisches Element zur Bildung oder zur Aufnahme eines optischen Signals mit im wesentlichen parallelem Strahlengang aufweist.

12. Steckeraufnahme nach Anspruch 10 oder 11, **dadurch gekennzeichnet, daß** sie mehrere in einer Reihe angeordnete Ausnehmungen (4) zur Aufnahme von Steckern (1) nach einem der vorstehenden Ansprüche aufweist.

13. Steckeraufnahme nach Anspruch 10, 11 oder 12, **dadurch gekennzeichnet, daß** sie zur Befestigung auf Leiterplatten vorgesehen ist.

14. Optoelektronisches Steckersystem mit einem Stecker (1) nach einem der vorstehenden Ansprüche 1 bis 9 und einer Stekkeraufnahme (2) nach einem der vorstehenden Ansprüche 10 bis 13.
